# EUROPÄISCHE PATENTSCHRIFT

(11) **EP 3 947 992 B1**
(45) Veröffentlichungstag und Bekanntmachung des Hinweises auf die Patenterteilung: **19.07.2023**
(21) Anmeldenummer: 20710095.9
(22) Anmeldetag: 04.03.2020
(51) Int. Cl.: F16C 11/06, B60G 7/00, F16C 41/00

(54) **KUGELGELENK FÜR EIN FAHRWERK EINES FAHRZEUGS UND VERFAHREN ZUM HERSTELLEN EINES SOLCHEN KUGELGELENKS**
BALL JOINT FOR A CHASSIS OF A VEHICLE AND METHOD FOR PRODUCING A BALL JOINT OF THIS KIND
JOINT À ROTULE POUR CHÂSSIS DE VÉHICULE ET PROCÉDÉ DE FABRICATION DUDIT JOINT À ROTULE

(30) Priorität: 02.04.2019 DE 102019204659
(43) Veröffentlichungstag der Anmeldung: 09.02.2022
(73) Patentinhaber: ZF Friedrichshafen AG, 88046 Friedrichshafen (DE)
(72) Erfinder: KRAMER, Thomas, 26133 Oldenburg (DE); HOLTHEIDE, Josef, 49434 Neuenkirchen (DE)
(74) Vertreter: ZF Friedrichshafen AG
(86) Internationale Anmeldenummer: PCT/EP2020/055719
(87) Internationale Veröffentlichungsnummer: WO 2020/200615

(56) Entgegenhaltungen:
- EP-A1- 0 442 602
- EP-A1- 3 260 714
- EP-A2- 0 231 479
- WO-A1-03/052284
- DE-A1-102016 217 535
- JP-A- 2008 223 932

## Beschreibung

Die Erfindung betrifft ein Kugelgelenk für ein Fahrwerk eines Fahrzeugs mit einem Gelenkinnenteil und mit einer Gleitlagerung, wobei das Gelenkinnenteil beweglich in der Gleitlagerung gelagert ist, und mit einem Verschlusselement zum Verschließen eines Gelenkgehäuses, wobei die Gleitlagerung und das Verschlusselement miteinander verbunden sind und die Gleitlagerung für das Gelenkinnenteil aus einem einzigen und einstückigen Kunststoffteil ausgebildet ist. Des Weiteren betrifft die Erfindung ein Verfahren zum Herstellen eines solchen Kugelgelenks.

Ein derartiges Kugelgelenk ist aus der WO 03/052284 A1 bekannt, welches die Merkmale des Oberbegriffs von Anspruch 1 offenbart. Hiernach weist ein Kugelgelenk eine Lagerschale und einen separaten Gehäusedeckel zum Verschließen einer Gehäuseöffnung auf. Die Ränder der Lagerschale und des Gehäusedeckels sind gemeinsam in einer Nut eines Gehäuses aufgenommen, wodurch die Lagerschale und der Gehäusedeckel zusammen an dem Gehäuse gehalten sind. Weitere derartige Kugelgelenke sind aus der DE 10 2016 217535 A1, der EP 0 442 602 A1 oder EP 0 231 479 A2 bekannnt.

Aus der DE 10 2005 005 667 A1 ist ein Kugelgelenk bekannt, wobei das Verschlusselement als ein Verschlussring ausgebildet ist, der aus einem Flachteil und einem an dessen Unterseite abragenden, stutzenförmigen Fortsatz gebildet ist. Der Fortsatz weist innenseitig einen sphärisch ausgebildeten Abschnitt mit einer Lagerfläche für eine Gelenkkugel auf. Die Lagerfläche ist aus einem reibungsarmen Material gebildet. Zusätzlich weist dieses Kugelgelenk eine übliche und separate Kugelschale bzw. Lagerschale auf. Durch die Kombination der Lagerfläche des Fortsatzes mit der separaten Lagerschale ist eine Gleitlagerung gebildet.

Hierbei ist von Nachteil, dass für die Ausbildung der Gleitlagerung mehrere separate Bauteile benötigt werden. Hierdurch sind mehrere Montageschritte notwendig, was zu einem erhöhten und unerwünschten Aufwand führt. Zudem steigt zunehmend der Bedarf, zumindest eine elektronische Komponente an einem Kugelgelenk anordnen zu können.

Es ist die der Erfindung zu Grunde liegende Aufgabe, ein Kugelgelenk und/oder ein Verfahren der eingangs genannten Art derart weiterzuentwickeln, dass die Anzahl der Bauteile und/oder der Montageschritte reduzierbar ist. Insbesondere soll eine alternative Ausführungsform bereitgestellt werden.

Die der Erfindung zu Grunde liegende Aufgabe wird mit einem Kugelgelenk nach Anspruch 1 und mittels eines Verfahrens nach Anspruch 8 gelöst. Bevorzugte Weiterbildungen der Erfindung finden sich in den Unteransprüchen und in der nachfolgenden Beschreibung.

Das Kugelgelenk ist für ein Fahrwerk eines Fahrzeugs, insbesondere eines Kraftfahrzeugs, ausgebildet. Vorzugsweise ist das Kugelgelenk ein Bestandteil eines Fahrwerks und/oder einer Fahrwerkkomponente. Im Fahrzeugbau kommen Kugelgelenke auf vielfältige Weise zum Einsatz. Insbesondere im Fahrwerk dienen Kugelgelenke dazu, Fahrwerkkomponenten, wie beispielsweise Lenkerbauteile, Radträger, Spurstangen oder dergleichen, gelenkig miteinander oder mit dem Fahrzeugaufbau bzw. einem daran befestigten Achsträger zu verbinden.

Das Kugelgelenk weist ein Gelenkinnenteil auf. Das Gelenkinnenteil kann beispielsweise als ein Kugelzapfen oder als eine Kugelhülse ausgebildet sein. Des Weiteren weist das Kugelgelenk eine Gleitlagerung auf. Hierbei ist das Gelenkinnenteil beweglich in der Gleitlagerung gelagert. Die Gleitlagerung kann wenigstens einseitig offen ausgebildet sein. Die Gleitlagerung kann zwischen dem Gelenkinnenteil und dem Gelenkgehäuse, insbesondere einer Gehäuseausnehmung, angeordnet sein. Vorzugsweise liegt das Gelenkinnenteil gleitbeweglich an der Gleitlagerung an. Das Kugelgelenk hat ein Verschlusselement zum Verschließen eines Gelenkgehäuses. Hierbei kann bereits ein Verschließen im Sinne der vorliegenden Anmeldung vorliegen, wenn eine Öffnung des Kugelgelenks und/oder Gelenkgehäuses mittels des Verschlusselementes soweit reduziert oder verkleinert ist, dass das Gelenkinnenteil zuverlässig in der Gleitlagerung gehalten ist. Insbesondere dient das Verschlusselement zum Sichern des Gelenkinnenteils in dem Gelenkgehäuse. Somit kann das Verschlusselement ein Herausfallen und/oder ein Ausziehen des Gelenkinnenteils aus dem Gelenkgehäuse bis zu einer vorgegebenen Ausziehkraft verhindern. Die Gleitlagerung für das Gelenkinnenteil ist aus einem einzigen und einstückigen Kunststoffteil ausgebildet.

Hierbei ist von Vorteil, dass die Gleitlagerung mittels eines einzigen Bauteils realisierbar ist. Aufgrund der Verbindung des Verschlusselementes mit dem die Gleitlagerung bildenden Kunststoffteil ist zudem ein einziges Bauteil oder Hybridbauteil realisierbar, dass sowohl die Funktion der Gleitlagerung als auch die Funktion des Verschlusselementes übernimmt. Hierdurch lässt sich die Anzahl einzelner Bauteile und/oder die Anzahl an Montageschritten reduzieren.

Vorzugsweise weist das Kugelgelenk eine Gelenkachse und/oder Mittellängsachse auf, um die das Kugelgelenk und/oder das Gelenkinnenteil bewegbar ist. Insbesondere erstreckt sich die Gelenkachse und/oder die Mittellängsachse in axialer Richtung des Gelenkinnenteils. Die Gelenkachse und die Mittellängsachse können zusammenfallen. Insbesondere ist das Kugelgelenk, die Gleitlagerung, das Verschlusselement und/oder das Kunststoffteil rotationssymmetrisch oder im Wesentlichen rotationssymmetrisch zu der Gelenkachse und/oder der Mittellängsachse ausgebildet. Die Gelenkachse und/oder Mittellängsachse kann durch einen Mittelpunkt einer, insbesondere kugelartigen oder kugelförmigen, Gelenkkugel des Gelenkinnenteils verlaufen.

Im Rahmen der vorliegenden Anmeldung kann der Ausdruck "radial" eine oder jedwede Richtung kennzeichnen, die senkrecht zur axialen Richtung des Kugelgelenks, der Gelenkachse und/oder der Mittellängsachse verläuft.

Insbesondere ist unter einer bewegbaren und/oder gelenkigen Lagerung des Gelenkinnenteils in der Gleitlagerung eine Schwenkbeweglichkeit, Kippbeweglichkeit und/oder Drehbeweglichkeit zu verstehen. Unter "Kippen" oder "Verkippen" des Gelenkinnenteils wird insbesondere eine Bewegung des Gelenkinnenteils relativ zu der Gleitlagerung und/oder dem Gelenkgehäuse verstanden, bei welcher eine Veränderung eines zwischen der Gelenkachse und einer Gehäuseachse eingeschlossenen Winkels eintritt. Bevorzugt erfolgt das Kippen oder Verkippen um einen Mittelpunkt eines Lagerbereichs, insbesondere eines kugelförmigen oder kugelartigen Abschnitts, des Gelenkinnenteils, vorzugsweise einer Gelenkkugel des Gelenkinnenteils. Insbesondere wird unter "Drehen" oder "Verdrehen" des Gelenkinnenteils eine Bewegung des Gelenkinnenteils verstanden, bei welcher das Gelenkinnenteil relativ zu der Gleitlagerung und/oder zu dem Gelenkgehäuse um die Gelenkachse und/oder um die Mittellängsachse gedreht wird. Vorzugsweise lässt eine gelenkige Verbindung keine translatorische Bewegung des Gelenkinnenteils in Bezug zu der Gleitlagerung und/oder dem Gelenkgehäuse zu.

Gemäß einer Weiterbildung weist das Kunststoffteil zum Ausbilden der Gleitlagerung für das Gelenkinnenteil einen Lagerschalenabschnitt auf. Insbesondere übernimmt der Lagerschalenabschnitt des Kunststoffteils vollständig die Funktion einer sonst üblichen separaten Lagerschale. Vorzugsweise weist das Gelenkinnenteil eine Gelenkkugel auf. Insbesondere umschließt und/oder umgreift der Lagerschalenabschnitt teilweise die Gelenkkugel des Gelenkinnenteils. Insbesondere liegt eine Innenseite des Lagerschalenabschnittes an einer Außenseite der Gelenkkugel an. Entsprechend ist der Lagerschalenabschnitt, insbesondere die Innenseite des Lagerschalenabschnittes, korrespondierend zu der Gelenkkugel, insbesondere der Außenseite der Gelenkkugel, ausgebildet. Aufgrund des teilweisen Umschließens und/oder Umgreifens der Gelenkkugel mittels des Lagerschalenabschnittes ist das Gelenkinnenteil bzw. die Gelenkkugel formschlüssig in dem Lagerschalenabschnitt gehalten. Der Lagerschalenabschnitt kann sich ausgehend von einer Stirnseite und/oder Polfläche der Gelenkkugel in Richtung eines Gelenkzapfens des Gelenkinnenteils über einen Äquator der Gelenkkugel hinaus erstrecken.

Erfindungsgemäß weist das Verschlusselement mehrere Durchbrüche auf. Durch die Durchbrüche des Verschlusselementes kann sich das Material des Kunststoffteils hindurch erstrecken. Hierbei sind die Durchbrüche des Verschlusselementes mittels des Materials des Kunststoffteils ausgefüllt. Aufgrund des Zusammenwirkens der Durchbrüche und des Kunststoffteils ist eine feste und formschlüssige Verbindung zwischen dem Kunststoffteil und dem Verschlusselement realisiert. Auf diese Weise lässt sich das Kunststoffteil einfach und zuverlässig mit dem Verschlusselement fest verbinden. Die Durchbrüche können beispielsweise mittels eines Stanzverfahrens in das Verschlusselement eingebracht werden.

Vorzugsweise sind die mehreren Durchbrüche ringartig in dem Verschlusselement angeordnet. Hierbei können die einzelnen Durchbrüche als Löcher und/oder Schlitze ausgebildet sein. Die mehreren Durchbrüche können somit derart zueinander angeordnet sein, dass sich insgesamt eine ringartige Anordnung ergibt. Insbesondere ist die ringartige Anordnung der Durchbrüche rotationssymmetrisch zu einer Mittellängsachse des Kugelgelenks ausgebildet.

Gemäß einer Weiterbildung weist das Kunststoffteil mehrere, insbesondere stegartige, Anlageabschnitte auf. Insbesondere liegen die Anlageabschnitte an einer Fläche des Verschlusselementes an. Hierdurch kann eine formschlüssige Verbindung des Kunststoffteils mit dem Verschlusselement verbessert sein. Vorzugsweise sind die mehreren Anschlagabschnitte ringartig um eine Außenseite des Kunststoffteils herum angeordnet. Insbesondere liegen die mehreren Anlageabschnitte an einer dem Gelenkinnenteil zugewandten Fläche des Verschlusselementes an.

Nach einer weiteren Ausführungsform weist das Kunststoffteil einen Aufnahmeabschnitt zum Anordnen einer elektronischen Komponente auf. Somit kann ein einziges Bauteil oder Hybridbauteil, gebildet aus dem Verschlusselement und dem Kunststoffteil, wenigstens drei Funktionen übernehmen. Hierbei handelt es sich um die Funktion des Verschlusselementes, die Funktion der Gleitlagerung sowie um die Funktion der Anordnung einer elektronischen Komponente. Vorzugsweise ist der Aufnahmeabschnitt in einem von dem Lagerabschnitt abgewandten Bereich angeordnet. Insbesondere ist das Verschlusselement zwischen dem Lagerschalenabschnitt und dem Aufnahmeabschnitt angeordnet. Der Bereich des Kunststoffteils zwischen dem Lagerschalenabschnitt und dem Aufnahmeabschnitt kann als Verbindungsabschnitt des Kunststoffteils ausgebildet sein. Insbesondere dient der Verbindungsabschnitt zum Verbinden des Kunststoffteils mit dem Verschlusselement.

Vorzugsweise werden der Aufnahmeabschnitt, der Lagerschalenabschnitt und/oder der Verbindungsabschnitt in einem einzigen Herstellungsschritt beim Anspritzen des Kunststoffteils an das Verschlusselement hergestellt. Die elektronische Komponente kann mittels des Aufnahmeabschnittes an dem Kunststoffteil und/oder an dem Verschlusselement gehalten werden. Die elektronische Komponente kann als ein Sensorelement ausgebildet sein. Insbesondere ist die elektronische Komponente als eine Steckerverbindung realisiert. Des Weiteren kann die elektronische Komponente als ein Chip, RFID-Chip oder als Sensor-Schaltkreis ausgebildet sein. Die elektronische Komponente kann mit einer weiteren elektronischen Komponente zum Ausbilden einer Sensoreinrichtung zusammenwirken. Beispielsweise kann die weitere elektronische Komponente dem Gelenkinnenteil zugeordnet sein. Ggf. kann anstelle der weiteren elektronischen Komponente ein Magnet verwendet werden. Mittels einer entsprechend ausgebildeten Sensoreinrichtung kann beispielsweise die Lage des Gelenkinnenteils in dem Kugelgelenk bestimmt werden. Eine entsprechende Sensoreinrichtung kann als eine Winkelsensoreinrichtung ausgebildet sein. Die elektronische Komponente in dem Aufnahmeabschnitt kann vollständig in dem Material des Kunststoffteils gekapselt sein. Alternativ kann der Aufnahmeabschnitt derart ausgebildet sein, dass dieser zum Festsetzen der elektronischen Komponente mit einem weiteren und/oder separaten Halteelement zusammenwirken kann. Das weitere Halteelement kann beispielsweise mittels einer Rast- und/oder Schnappverbindung mit dem Aufnahmeabschnitt zum Festsetzen der elektronischen Komponente zusammenwirken.

Das Verschlusselement kann als ein Verschlussdeckel oder ein Verschlussring realisiert sein. Insbesondere ist das Verschlusselement aus einem Metall gebildet. In Kombination mit dem Kunststoffteil bilden das Verschlusselement und das Kunststoffteil ein einziges Bauteil. Aufgrund von unterschiedlichen Materialien bezüglich des Kunststoffteils einerseits und des Verschlusselementes andererseits ist dieses Bauteil als ein Hybridbauteil realisiert.

Vorzugsweise ist das Gelenkinnenteil als ein Kugelzapfen ausgebildet. In der Ausbildung als ein Kugelzapfen weist das Gelenkinnenteil eine Gelenkkugel und einen Gelenkzapfen auf. Insbesondere erstreckt sich der Gelenkzapfen des Gelenkinnenteils aus einer Öffnung des Lagerschalenabschnittes heraus. Vorzugsweise ermöglicht die Öffnung des Lagerschalenabschnittes die gelenkige Beweglichkeit des Gelenkinnenteils in der Gleitlagerung bzw. in dem Lagerschalenabschnitt. Zugleich kann der Durchmesser der Öffnung einen maximalen Kippwinkel des Gelenkinnenteils in Bezug zu der Mittellängsachse des Kugelgelenks vorgeben bzw. definieren.

Gemäß einer Weiterbildung ragt ein Rand des Verschlusselementes über das Kunststoffteil hinaus. Insbesondere ragt der Rand des Verschlusselementes radial zu der Mittellängsachse des Kugelgelenks über das Kunststoffteil hinaus. Vorzugsweise ist der Rand zum Halten des Verschlusselementes an dem Gelenkgehäuse ausgebildet. Insbesondere ist der herausragende und/oder hinausstehende Rand des Verschlusselementes nicht von dem Material des Kunststoffteils bedeckt. Dieser Rand kann somit in direktem Kontakt mit dem Gelenkgehäuse zum Verbinden des Verschlusselementes mit dem Gelenkgehäuse stehen. Beispielsweise kann der Rand des Verschlusselementes in einer Haltenut des Gelenkgehäuses angeordnet und/oder geklemmt sein. Hierbei kann die Haltenut des Gelenkgehäuses mittels einer Umformung hergestellt sein. Der Rand des Verschlusselementes kann eine ringartige Gestalt aufweisen.

Von besonderem Vorteil ist ein Verfahren zum Herstellen eines erfindungsgemäßen Kugelgelenks, wobei eine einteilige Gleitlagerung für das Gelenkinnenteil einstückig aus einem einzigen Kunststoffteil ausgebildet wird. Zum Herstellen des erfindungsgemäßen Kugelgelenks werden das Gelenkinnenteil und das Verschlusselement in ein Spritzgusswerkzeug eingelegt. Sodann wird ein Kunststoffmaterial zum Ausbilden des Kunststoffteils eingespritzt. Hierbei kann zum einen der Lagerschalenabschnitt zum gelenkigen Aufnehmen der Gelenkkugel des Gelenkinnenteils ausgebildet werden und zum anderen zeitgleich eine feste Verbindung des Kunststoffteils mit dem Verschlusselement realisiert werden. Erfindungsgemäß durchdringt das Material des Kunststoffteils beim Spritzgussgießen mehrere Durchbrüche des Verschlusselementes. Vorzugweise wird zeitgleich der Aufnahmeabschnitt zum Anordnen einer elektronischen Komponente ausgebildet. Nach dem Aushärten des Materials des Kunststoffteils ist somit ein einziges Bauteil gebildet, das das Gelenkinnenteil, das Verschlusselement und das Kunststoffteil umfasst. Dieses Bauteil kann anschließend in ein Gelenkgehäuse eingesetzt werden. Insbesondere wird das Verschlusselement an dem Gelenkgehäuse festgesetzt. Hierzu kann beispielsweise eine Kante des Gelenkgehäuses um den Rand des Verschlusselementes verrollt werden.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine perspektivische Seitenansicht eines erfindungsgemäßen Kugelgelenks,
- Fig. 2: ein Ausschnitt einer geschnittenen Seitenansicht des erfindungsgemäßen Kugelgelenks nach Fig. 1, und
- Fig. 3: ein Ausschnitt einer weiteren perspektivischen Ansicht des erfindungsgemäßen Kugelgelenks nach Fig. 1 und 2.

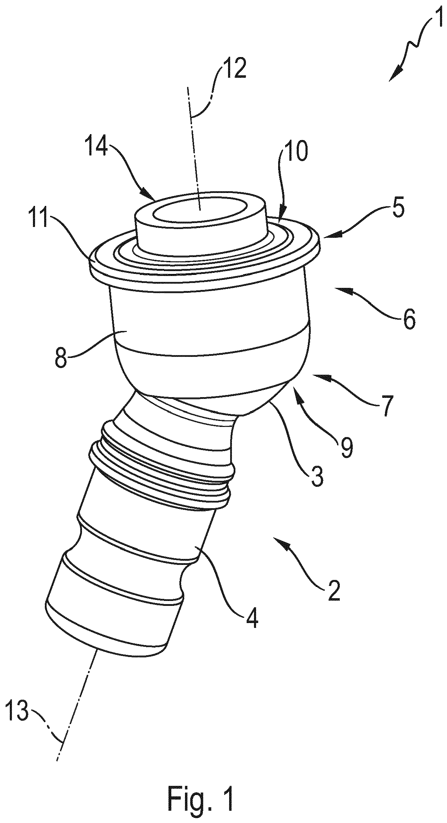

Figur 1 zeigt eine perspektivische Seitenansicht eines erfindungsgemäßen Kugelgelenks 1. Das Kugelgelenk 1 weist ein Gelenkinnenteil 2 auf. Das Gelenkinnenteil 2 ist bei diesem Ausführungsbeispiel als ein Kugelzapfen ausgebildet. Hierzu weist das Gelenkinnenteil 2 eine Gelenkkugel 3 und einen Gelenkzapfen 4 auf. Des Weiteren weist das Kugelgelenk 1 ein Verschlusselement 5 auf. Das Verschlusselement 5 und das Gelenkinnenteil 2 sind bei diesem Ausführungsbeispiel aus einem Metall gebildet.

Zudem weist das Kugelgelenk 1 ein Kunststoffteil 6 auf. Das Kunststoffteil 6 ist, wie anhand der nachfolgenden Figuren noch näher erläutert wird, fest mit dem Verschlusselement 5 verbunden. Das Kunststoffteil 6 bildet eine Gleitlagerung 7 für das Gelenkinnenteil 2. Hierbei ist die Gleitlagerung 7 ausschließlich aus dem einstückigen Kunststoffteil 6 gebildet.

Im Einzelnen weist das Kunststoffteil 6 zum Ausbilden der Gleitlagerung 7 für das Gelenkinnenteil 2 bzw. die Gelenkkugel 3 einen Lagerschalenabschnitt 8 auf. Der Lagerschalenabschnitt 8 umschließt bzw. umgreift teilweise die Gelenkkugel 3 des Gelenkinnenteils 2. Hierdurch ist das Gelenkinnenteil 2 schwenk- und drehbeweglich in dem Lagerschalenabschnitt 8 gehalten. Mindestens der Gelenkzapfen 4 des Gelenkinnenteils 2 erstreckt sich durch eine Öffnung des Lagerschalenabschnitts 8 nach außen hinaus. Die Öffnung 9 ist an einer von dem Verschlusselement 5 abgewandten Seite des Lagerschalenabschnitts 8 angeordnet. Im Bereich des Verschlusselementes 5 durchdringt das Kunststoffteil 6 zumindest teilweise das Verschlusselement 5 zum Ausbilden einer formschlüssigen Verbindung. Das Kunststoffteil 6 bildet im Bereich des Verschlusselementes 5 einen Verbindungsabschnitt 10. Mittels des Verbindungsabschnitts 10 ist das Kunststoffteil 6 fest, insbesondere formschlüssig, mit dem Verschlusselement 5 verbunden.

Das Verschlusselement 5 hat einen Rand 11. Der Rand 11 des Verschlusselementes 5 ist nicht von dem Material des Kunststoffteils 6 bedeckt. Des Weiteren steht der Rand 11 radial zu einer Mittellängsachse 12 des Kugelgelenks 1 nach außen über das Kunststoffteil 6 bzw. den Lagerschalenabschnitt 8 hinaus. Mittels des Randes 11 ist das Kugelgelenk 1 in einem hier nicht näher dargestellten Gelenkgehäuse festsetzbar. Insbesondere ist ein Gelenkgehäuse mit dem Verschlusselement 5 und in Zusammenwirkung mit dem Rand 11 verschließbar.

Das Kunststoffteil 6 und das Verschlusselement 5 sind bei diesem Ausführungsbeispiel rotationssymmetrisch zu der Mittellängsachse 12 ausgebildet. Das Gelenkinnenteil 2 weist eine Gelenkachse 13 auf. Bei dieser Darstellung ist das Gelenkinnenteil 2 mit der Gelenkachse 13 verkippt zu der Mittellängsachse 12 dargestellt. In einer neutralen Ausgangsposition können die Mittellängsachse 12 und die Gelenkachse 13 zusammenfallen. Das Gelenkinnenteil 2 ist rotationssymmetrisch zu der Gelenkachse 13 ausgebildet.

Bei diesem Ausführungsbeispiel weist das Kunststoffteil 6 einen Aufnahmeabschnitt 14 zum Anordnen einer hier nicht näher dargestellten elektronischen Komponente auf. Der Aufnahmeabschnitt 14 ist in einem von dem Lagerschalenabschnitt 8 abgewandten Bereich angeordnet. Das Verschlusselement 5 bzw. der Verbindungsabschnitt 10 ist zwischen dem Lagerschalenabschnitt 8 und dem Aufnahmeabschnitt 14 angeordnet. Der Aufnahmeabschnitt 14 ist hier lediglich im Sinne eines Platzhalters ringartig dargestellt. Tatsächlich kann der Aufnahmeabschnitt 14 je nach Bedarf zum Anordnen einer elektronischen Komponente, beispielsweise eines Sensorelementes, ausgebildet sein.

Bei diesem Ausführungsbeispiel übernimmt das Kunststoffteil 6 mindestens drei Funktionen. Zum einen stellt das Kunststoffteil 6 mit dem Lagerschalenabschnitt 8 die vollständige Gleitlagerung 7 für die Gelenkkugel 3 des Gelenkinnenteils 2 bereit. Des Weiteren stellt das Kunststoffteil 3 mittels des Verbindungsabschnitts 10 eine feste Verbindung mit dem Verschlusselement 5 her. Schließlich stellt das Kunststoffteil 6 mittels des Aufnahmeabschnittes 14 eine Aufnahme für eine elektronische Komponente bereit.

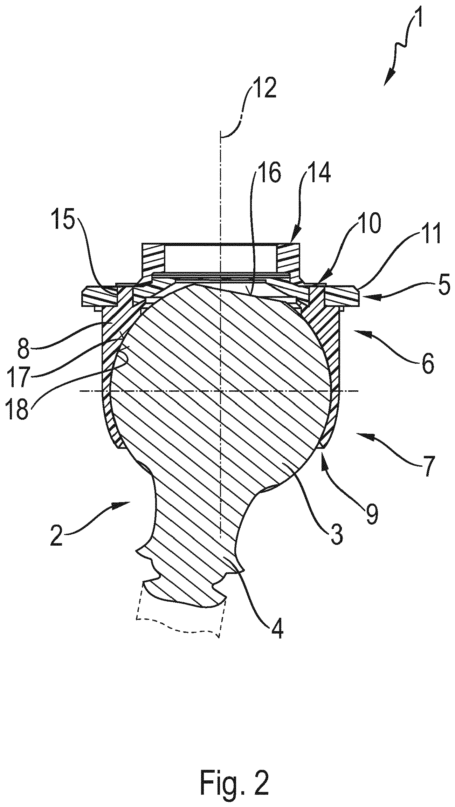

Figur 2 zeigt einen Ausschnitt einer geschnittenen Seitenansicht des erfindungsgemäßen Kugelgelenks 1 nach Figur 1. Das Verschlusselement 5 ist bei diesem Ausführungsbeispiel als ein Verschlussdeckel ausgebildet. Das Verschlusselement 5 weist mehrere Durchbrüche 15 auf. Das Material des Kunststoffteils 6 durchdringt die Durchbrüche 15 und füllt diese vollständig aus. Aufgrund des Zusammenwirkens der Durchbrüche 15 und des Kunststoffteils 6 ist eine feste und formschlüssige Verbindung zwischen dem Kunststoffteil 6 und dem Verschlusselement 5 realisiert. Hierdurch ist zugleich der Verbindungsabschnitt 10 des Kunststoffteils 6 gebildet.

Bei diesem Ausführungsbeispiel weist das Gelenkinnenteil 2 stirnseitig bzw. auf einer von dem Gelenkzapfen 4 abgewandten Seite eine Polfläche 16 auf. Abgesehen von der Polfläche 16 liegt eine Außenseite 17 der Gelenkkugel 3 an einer Innenseite 18 des Lagerschalenabschnitts 8 an. Hierzu sind die Außenseite 17 und die Innenseite 18 formkorrespondierend zueinander ausgebildet.

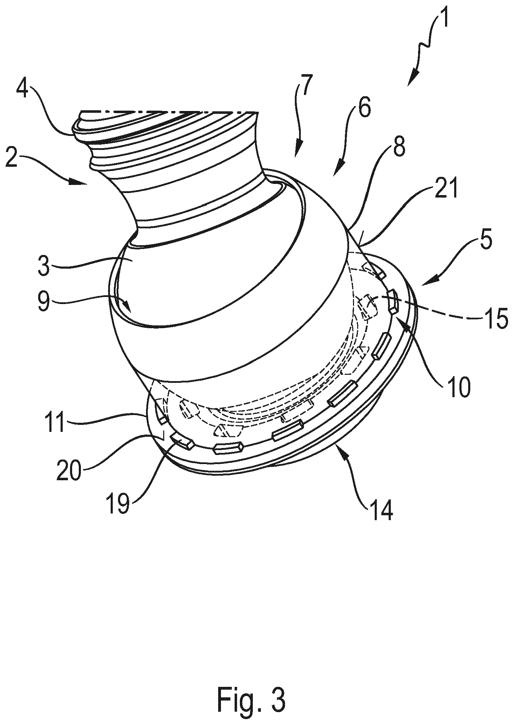

Figur 3 zeigt einen Ausschnitt einer weiteren perspektivischen Ansicht des erfindungsgemäßen Kugelgelenks 1 nach Figuren 1 und 2. Hierbei ist ein Teil des Lagerschalenabschnitts 8 durchscheinend bzw. transparent dargestellt. Hierdurch sind mehrere der Durchbrüche 15 in dem Verschlusselement 5 gut erkennbar. Die Durchbrüche 15 sind ringartig in dem Verschlusselement 5 angeordnet. Bei diesem Ausführungsbeispiel sind die Durchbrüche 15 als Schlitze ausgebildet. Für eine bessere Übersichtlichkeit sind nicht sämtliche Durchbrüche 15 mit einem Bezugszeichen versehen.

Das Kunststoffteil 6 weist bei diesem Ausführungsbeispiel mehrere Anlageabschnitte 19 auf. Hier sind die Anlageabschnitte 19 stegartig ausgebildet. Für eine bessere Übersichtlichkeit sind nicht sämtliche Anlageabschnitte 19 mit einem Bezugszeichen versehen. Die Anlageabschnitte 19 liegen an einer Fläche 20 des Verschlusselementes 5 an. Die Fläche 20 des Verschlusselementes 5 ist dem Gelenkinnenteil 2 zugewandt. Die mehreren Anlageabschnitte 19 sind ringartig um eine Außenseite 21 des Kunststoffteils 6 herum angeordnet. Insbesondere sind die Anlageabschnitte 19 im Bereich des Verbindungsabschnitts 10 oder in einem Übergangsbereich zwischen dem Lagerschalenabschnitt 8 und dem Verbindungsabschnitt 10 angeordnet.

### Bezugszeichen

- 1: Kugelgelenk
- 2: Gelenkinnenteil
- 3: Gelenkkugel
- 4: Gelenkzapfen
- 5: Verschlusselement
- 6: Kunststoffteil
- 7: Gleitlagerung
- 8: Lagerschalenabschnitt
- 9: Öffnung
- 10: Verbindungsabschnitt
- 11: Rand
- 12: Mittellängsachse
- 13: Gelenkachse
- 14: Aufnahmeabschnitt
- 15: Durchbruch
- 16: Polfläche
- 17: Außenseite
- 18: Innenseite
- 19: Anlageabschnitt
- 20: Fläche
- 21: Außenseite

## Patentansprüche

1. Kugelgelenk für ein Fahrwerk eines Fahrzeugs mit einem Gelenkinnenteil (2) und mit einer Gleitlagerung (7), wobei das Gelenkinnenteil (2) beweglich in der Gleitlagerung (7) gelagert ist, und mit einem Verschlusselement (5) zum Verschließen eines Gelenkgehäuses, wobei die Gleitlagerung (7) und das Verschlusselement (5) miteinander verbunden sind, und die Gleitlagerung (7) für das Gelenkinnenteil (2) aus einem einzigen und einstückigen Kunststoffteil (6) ausgebildet ist, **dadurch gekennzeichnet, dass** das Verschlusselement (5) mehrere Durchbrüche (15) aufweist, durch die sich das Material des Kunststoffteils (6) hindurch erstreckt und welche mittels des Materials des Kunststoffteils (6) ausgefüllt sind, wobei aufgrund des Zusammenwirkens der Durchbrüche (15) und des Kunststoffteils (6) eine feste und formschlüssige Verbindung zwischen dem Kunststoffteil (6) und dem Verschlusselement (5) realisiert ist.

2. Kugelgelenk nach Anspruch 1, **dadurch gekennzeichnet, dass** das Kunststoffteil (6) zum Ausbilden der Gleitlagerung (7) für das Gelenkinnenteil (2) einen Lagerschalenabschnitt (8) aufweist, der eine Gelenkkugel (3) des Gelenkinnenteil (2) teilweise umschließt und/oder umgreift.

3. Kugelgelenk nach Anspruch 1, **dadurch gekennzeichnet, dass** die mehreren Durchbrüche (15) ringartig in dem Verschlusselement (5) angeordnet sind, insbesondere sind die Durchbrüche (15) als Löcher und/oder Schlitze ausgebildet.

4. Kugelgelenk nach einem der vorhergehenden Ansprüche, **dadurch gekennzeichnet, dass** das Kunststoffteil (6) mehrere, insbesondere stegartige, Anschlagabschnitte (19) aufweist, die an einer Fläche (20) des Verschlusselementes (5) anliegen, vorzugsweise sind die mehreren Anschlagabschnitte (19) ringartig um eine Außenseite (17) des Kunststoffteils (6) herum angeordnet und/oder liegen an einer dem Gelenkinnenteil (2) zugewandten Fläche (20) des Verschlusselementes (5) an.

5. Kugelgelenk nach einem der vorhergehenden Ansprüche, **dadurch gekennzeichnet, dass** das Kunststoffteil (6) einen Aufnahmeabschnitt (14) zum Anordnen einer elektronischen Komponente, insbesondere eines Sensorelementes, aufweist, vorzugsweise ist der Aufnahmeabschnitt (14) in einem von dem Lagerschalenabschnitt (8) abgewandten Bereich angeordnet und/oder das Verschlusselement (5) ist zwischen dem Lagerschalenabschnitt (8) und dem Aufnahmeabschnitt (14) angeordnet.

6. Kugelgelenk nach einem der vorhergehenden Ansprüche, **dadurch gekennzeichnet, dass** das Verschlusselement (5) als ein Verschlussdeckel oder ein Verschlussring, insbesondere aus einem Metall, gebildet ist, vorzugsweise ist das Gelenkinnenteil (2) als ein Kugelzapfen ausgebildet.

7. Kugelgelenk nach einem der vorhergehenden Ansprüche, **dadurch gekennzeichnet, dass** ein Rand (11) des Verschlusselementes (5), insbesondere radial zu einer Mittellängsachse (12) des Kugelgelenks (1), über das Kunststoffteil (6) hinausragt, vorzugsweise ist der Rand (11) zum Halten des Verschlusselementes (5) an dem Gelenkgehäuse ausgebildet.

8. Verfahren zum Herstellen eines Kugelgelenks (1) nach einem der vorhergehenden Ansprüche, wobei eine einteilige Gleitlagerung (7) für das Gelenkinnenteil (2) einstückig aus einem einzigen Kunststoffteil (6) ausgebildet wird und das Verschlusselement (5) mehrere Durchbrüche (15) aufweist, durch die sich das Material des Kunststoffteils (6) hindurch erstreckt und welche mittels des Materials des Kunststoffteils (6) ausgefüllt werden, wobei aufgrund des Zusammenwirkens der Durchbrüche (15) und des Kunststoffteils (6) eine feste und formschlüssige Verbindung zwischen dem Kunststoffteil (6) und dem Verschlusselement (5) realisiert wird.

9. Verfahren nach Anspruch 8, **dadurch gekennzeichnet, dass** das Kunststoffteil (6) in einem Spritzgussprozess hergestellt wird und/oder das Gelenkinnenteil (2) zusammen mit dem Verschlusselement (5) und mit dem Kunststoffteil (6) in ein Gelenkgehäuse eingesetzt wird, insbesondere wird das Verschlusselement (5) an dem Gelenkgehäuse festgesetzt.

## Claims

1. Ball joint for a chassis of a vehicle, having a joint inner part (2) and having a plain-bearing arrangement (7), wherein the joint inner part (2) is movably mounted in the plain-bearing arrangement (7), and having a closure element (5) for closing off a joint housing, wherein the plain-bearing arrangement (7) and the closure element (5) are connected to one another, and the plain-bearing arrangement (7) for the joint inner part (2) is formed from a single one-piece plastic part (6), **characterized in that** the closure element (5) has multiple apertures (15) through which the material of the plastic part (6) extends and which are filled by means of the material of the plastic part (6), wherein, on account of the interaction of the apertures (15) and the plastic part (6), a firm and form-fitting connection between the plastic part (6) and the closure element (5) is realized.

2. Ball joint according to Claim 1, **characterized in that** the plastic part (6), for forming the plain-bearing arrangement (7) for the joint inner part (2), has a bearing-shell portion (8) which partially encloses and/or engages around a joint ball (3) of the joint inner part (2) .

3. Ball joint according to Claim 1, **characterized in that** the multiple apertures (15) are arranged in an annular manner in the closure element (5), the apertures (15) in particular being in the form of holes and/or slots.

4. Ball joint according to one of the preceding claims, **characterized in that** the plastic part (6) has multiple, in particular web-like, abutment portions (19) which abut against a surface (20) of the closure element (5), the multiple abutment portions (19) preferably being arranged in an annular manner around an outer side (17) of the plastic part (6) and/or abutting against a surface (20) of the closure element (5) that faces towards the joint inner part (2).

5. Ball joint according to one of the preceding claims, **characterized in that** the plastic part (6) has a receiving portion (14) for arrangement of an electronic component, in particular a sensor element, it preferably being the case that the receiving portion (14) is arranged in a region which faces away from the bearing-shell portion (8) and/or the closure element (5) is arranged between the bearing-shell portion (8) and the receiving portion (14).

6. Ball joint according to one of the preceding claims, **characterized in that** the closure element (5) is in the form of a closure cover or a closure ring, in particular composed of a metal, the joint inner part (2) preferably being in the form of a ball pin.

7. Ball joint according to one of the preceding claims, **characterized in that** an edge (11) of the closure element (5) projects beyond the plastic part (6), in particular radially in relation to a central longitudinal axis (12) of the ball joint (1), the edge (11) preferably being configured for holding the closure element (5) on the joint housing.

8. Method for producing a ball joint (1) according to one of the preceding claims, wherein an integral plain-bearing arrangement (7) for the joint inner part (2) is formed in one piece from a single plastic part (6), and the closure element (5) has multiple apertures (15) through which the material of the plastic part (6) extends and which are filled by means of the material of the plastic part (6), wherein, on account of the interaction of the apertures (15) and the plastic part (6), a firm and form-fitting connection between the plastic part (6) and the closure element (5) is realized.

9. Method according to Claim 8, **characterized in that** the plastic part (6) is produced in an injection-moulding process, and/or the joint inner part (2) is inserted together with the closure element (5) and with the plastic part (6) into a joint housing, the closure part (5) in particular being fixed to the joint housing.

## Revendications

1. Joint à rotule pour un châssis d'un véhicule, avec une partie intérieure de joint (2) et avec un palier lisse (7), la partie intérieure de joint (2) étant montée de manière mobile dans le palier lisse (7), et avec un élément de fermeture (5) pour fermer un boîtier de joint, le palier lisse (7) et l'élément de fermeture (5) étant reliées l'un à l'autre, et le palier lisse (7) pour la partie intérieure de joint (2) étant formé à partir d'une partie en matière plastique (6) unique et d'un seul tenant, **caractérisé en ce que** l'élément de fermeture (5) présente plusieurs percées (15) à travers lesquelles s'étend le matériau de la partie en matière plastique (6) et qui sont remplies au moyen du matériau de la partie en matière plastique (6), une liaison solide et par complémentarité de forme étant réalisée entre la partie en matière plastique (6) et l'élément de fermeture (5) en raison de l'interaction des percées (15) et de la partie en matière plastique (6).

2. Joint à rotule selon la revendication 1, **caractérisé en ce que** la partie en matière plastique (5) présente, pour former le palier lisse (7) pour la partie intérieure de joint (2), une section de coque de palier (8) qui encercle et/ou entoure partiellement une rotule de joint (3) de la partie intérieure de joint (2).

3. Joint à rotule selon la revendication 1, **caractérisé en ce que** les plusieurs percées (15) sont agencées à la manière d'un anneau dans l'élément de fermeture (5), notamment les percées (15) sont configurées sous forme de trous et/ou de fentes.

4. Joint à rotule selon l'une quelconque des revendications précédentes, **caractérisé en ce que** la partie en matière plastique (6) présente plusieurs sections de butée (19), notamment en forme de nervure, qui s'appliquent contre une surface (20) de l'élément de fermeture (5), de préférence les plusieurs sections de butée (19) sont agencées à la manière d'un anneau autour d'un côté extérieur (17) de la partie en matière plastique (6) et/ou s'appliquent contre une surface (20) de l'élément de fermeture (5) tournée vers la partie intérieure de joint (2).

5. Joint à rotule selon l'une quelconque des revendications précédentes, **caractérisé en ce que** la partie en matière plastique (6) présente une section de réception (14) pour l'agencement d'un composant électronique, notamment d'un élément capteur, de préférence la section de réception (14) est agencée dans une zone détournée de la section de coque de palier (8) et/ou l'élément de fermeture (5) est agencé entre la section de coque de palier (8) et la section de réception (14) .

6. Joint à rotule selon l'une quelconque des revendications précédentes, **caractérisé en ce que** l'élément de fermeture (5) est formé sous la forme d'un couvercle de fermeture ou d'une bague de fermeture, notamment en un métal, de préférence la partie intérieure de joint (2) est configurée sous la forme d'un pivot sphérique.

7. Joint à rotule selon l'une quelconque des revendications précédentes, **caractérisé en ce qu'**un bord (11) de l'élément de fermeture (5) dépasse de la partie en matière plastique (6), notamment radialement par rapport à un axe longitudinal médian (12) du joint à rotule (1), de préférence le bord (11) est configuré pour maintenir l'élément de fermeture (5) sur le boîtier de joint.

8. Procédé de fabrication d'un joint à rotule (1) selon l'une quelconque des revendications précédentes, dans lequel un palier lisse (7) d'une seule pièce pour la partie intérieure de joint (2) est formé d'un seul tenant à partir d'une matière plastique (5) unique et l'élément de fermeture (5) présente plusieurs percées (15), à travers lesquelles s'étend le matériau de la partie en matière plastique (6) et qui sont remplies au moyen du matériau de la partie en matière plastique (6), une liaison solide et par complémentarité de forme entre la partie en matière plastique (6) et l'élément de fermeture (5) étant réalisée en raison de la coopération des percées (15) et de la partie en matière plastique (6).

9. Procédé selon la revendication 8, **caractérisé en ce que** la partie en matière plastique (6) est fabriquée dans un processus de moulage par injection et/ou la partie intérieure de joint (2) est insérée conjointement avec l'élément de fermeture (5) et avec la partie en matière plastique (6) dans un boîtier de joint, notamment l'élément de fermeture (5) est fixé sur le boîtier de joint.
